# FASCICULE DE BREVET EUROPEEN

(11) **EP 1 936 360 B1**
(45) Date de publication et mention de la délivrance du brevet: **17.02.2016**
(21) Numéro de dépôt: 07301533.1
(22) Date de dépôt: 09.11.2007
(51) Int. Cl.: G01N 21/64, D21H 21/48, G07D 7/12, B82Y 20/00, G06K 19/06

(54) **Dispositif de codage optique par effet plasmon et méthode d'authentification le mettant en oeuvre**
Vorrichtung zur optischen Kodierung durch Plasmonwirkung und Authentifizierungsmethode, bei der sie zum Einsatz kommt
Device with optical encoding by plasmon effect and authentication method implementing same

(30) Priorité: 22.12.2006 FR 0655888
(43) Date de publication de la demande: 25.06.2008
(73) Titulaire: Commissariat à l'Énergie Atomique et aux Énergies Alternatives, 75015 Paris (FR)
(72) Inventeur: Tardif, François, 38250, LANS EN VERCORS (FR); Raccurt, Olivier, 38730, CHELIEU (FR); Noel Céline, 38000, GRENOBLE (FR)
(74) Mandataire: Cabinet Laurent & Charras

(56) Documents cités:
- US-A1- 2004 157 237
- US-A1- 2005 142 605
- US-B1- 6 180 415

## Description

### DOMAINE DE L'INVENTION

La présente invention concerne un dispositif de codage optique se présentant sous forme de bille, comprenant au moins deux agrégats, susceptibles d'émettre par luminescence dans les domaines infrarouge, visibles et/ou ultraviolet. Cette aptitude à la luminescence est due à la présence d'un ou plusieurs luminophore(s) au sein de ces agrégats.

Le dispositif de codage optique - objet de la présente invention se rapporte donc au domaine de l'authentification et de la traçabilité de produits, par exemple dans le cadre de la détection de contrefaçons ou de falsifications.

### ETAT ANTERIEUR DE LA TECHNIQUE

On connaît aujourd'hui différents moyens techniques permettant de suivre et d'authentifier un produit. Ce produit peut être un objet d'art, un produit de consommation courante, un document d'identité, un moyen de paiement, etc...

Un tel produit peut ainsi être constitué d'un ou de plusieurs matériaux, parmi lesquels on trouve par exemple, le papier, un textile, le cuir, un plastique, etc.. Parmi les moyens mis en oeuvre actuellement pour assurer la traçabilité et l'authenticité de tels produits, on peut citer le code barre, et les hologrammes qui doivent être décodés de manière optique, les étiquettes électroniques (parfois désignées par le sigle anglosaxon RFID pour « *Radio Frequency Identification Data* ») qui sont décodées par un procédé électromagnétique. On connaît également les techniques de cryptographie, qui consistent à attribuer un code numérique crypté au produit à authentifier, ou encore l'insertion d'éléments spécifiques tels que des traceurs (luminescents, magnétiques, chimiques, etc.) dans la structure même de l'objet ou du produit à authentifier.

La présente invention relève de ce dernier domaine et, plus particulièrement, elle procède du traçage ou de l'authentification d'un produit au moyen de traceurs luminescents.

De manière connue, de tels traceurs luminescents forment un code optique qui doit être lu de manière à authentifier l'objet ou le produit. En général, on applique un mélange comportant un ou plusieurs luminophore(s), c'est-à-dire des petits grains, des molécules ou des particules de matière émettant de la lumière, directement sur la surface du produit à authentifier.

Lors de l'authentification du produit, on excite au moyen d'une source lumineuse extérieure, les luminophores ainsi déposés, puis on recueille les rayons lumineux qu'ils réémettent par désexcitation. L'analyse des spectres lumineux réémis par ces luminophores permet de déterminer précisément le code optique qui a été attribué à l'objet à authentifier associé à ces luminophores.

Le document US-4 146 792 fournit un exemple d'un tel codage optique destiné à authentifier des papiers fiduciaires. De manière connue, les électrons des atomes du luminophore sont excités par les photons d'une source lumineuse, puis émettent, lors de leur désexcitation, des photons dont la longueur d'onde dépend de celle des rayons incidents. Dans ce cas, le spectre de fluorescence émis par un luminophore est partiellement absorbé par un colorant, si bien qu'il s'agit d'un phénomène purement photonique. Il et donc difficile d'authentifier la nature de tels luminophores. Ainsi, l'authentification du papier fiduciaire est beaucoup plus sûre.

Cependant, les luminophores destinés à de telles applications d'authentification doivent présenter un haut rendement de luminescence (défini comme étant le rapport du nombre de photons émis sur le nombre de photons absorbés par le matériau luminescent) et doivent être suffisamment robustes pour être durablement aptes à émettre par luminescence. Or, les luminophores présentant ces propriétés de rendement et de robustesse existent en nombre limité, si bien que les combinaisons possibles pour former des codes optiques se trouvent également en nombre limité. Dans la mesure où les spectres de fluorescence, en particulier les pics, sont déjà connus et répertoriés, il est alors relativement facile d'identifier les matériaux luminescents composant les luminophores utilisés et partant, de contrefaire le code optique.

De plus, dans les rares cas où le matériau luminescent employé est peu connu, il est relativement aisé d'analyser la structure physico-chimique du matériau comportant les luminophores. Il est alors possible de contrefaire le dispositif de codage optique et, partant, de falsifier les objets authentiques.

Les documents US 6,180,415 B1 et US 2005/142605 décrivent l'utilisation de nanoparticules à effet plasmon de surface, dans le but d'augmenter les propriétés d'adsorption ou de fluorescence de substances chimiques destinées au marquage d'un média. Ainsi, il est possible d'appliquer une excitation moindre à des matériaux sensibles à la lumière.

La présente invention a donc pour objectif de réaliser un dispositif de codage optique infalsifiable et unique. Ce dispositif de codage optique a fondamentalement pour but d'éviter les inconvénients de l'état antérieur de la technique, et notamment d'empêcher l'analyse rétrospective du spectre lumineux réémis par les agrégats luminescents associés à l'objet à authentifier.

### EXPOSE DE L'INVENTION

La présente invention a donc pour objet un dispositif de codage optique fiable, difficile à décoder et quasiment impossible à contrefaire.

Ce dispositif de codage optique, tel que défini dans la revendication 1, est composé d'une pluralité d'agrégats susceptibles d'émettre par luminescence des rayons infrarouges, visibles ou ultraviolets. Lesdites agrégats comprennent au moins un luminophore, et comprennent en outre au moins une particule constituée d'un matériau à effet plasmon de surface, ledit luminophore et ladite particule étant destinés à entrer en interaction.

En d'autres termes, le dispositif de codage optique - objet de la présente invention, comprend deux types d'éléments agrégés entre eux et interagissant lors de l'émission de luminescence de l'un d'entre eux.

Ladite particule est apte à présenter un effet plasmon de surface lorsqu'elle est excitée au moyen d'un spectre d'énergie couvrant entièrement ou partiellement le spectre d'émission dudit luminophore.

On appelle effet de plasmon de surface, l'excitation collective des électrons situés sur les bandes de conduction des atomes constituant cette particule. La particule doit être excitée par des énergies comprises dans le spectre d'énergie du luminophore.

Il est ainsi possible d'obtenir une interaction importante et donc de moduler en conséquence le spectre lumineux émis pour authentifier l'objet muni d'un tel dispositif de codage optique.

Dans le cadre de l'invention, on entend par « moduler le spectre lumineux », le fait de pouvoir augmenter ou diminuer sélectivement certaines parties de la signature optique (émission et absorption) du luminophore, grâce la présence d'une particule à effet plasmon de surface.

La modification de la signature spectrale du luminophore dépend notamment :
- de la distance entre la particule à effet plasmon de surface et le luminophore ;
- les fréquences de résonance plasmon, ajustables par exemple grâce à la taille de la particule plasmon, par rapport à celles du luminophore.

Ainsi, cette association induisant cette modification et le contrôle des différents paramètres affectant cette modification augmentent considérablement le nombre de signatures optiques uniques, qui sont à disposition.

Selon une autre caractéristique de l'invention, le dispositif de codage optique se présentant sous forme de bille est formé par une enveloppe encapsulant lesdits au moins deux agrégats comprenant ledit luminophore et ladite particule. Cette enveloppe est constituée d'une matière transparente aux rayons infrarouges, visibles ou ultraviolets.

Ce faisant, le luminophore et la particule sont « noyés » et « enrobés » dans cette enveloppe, l'enveloppe se présentant alors sous la forme de billes.

L'association du luminophore et de la particule dans une même entité physique, qui peut être appelée « particule codante », présente des avantages notables :
- cette entité codante peut être fabriquée extemporanément, de manière indépendante du milieu à marquer. Au moment du marquage, il suffit de la déposer ou de l'intégrer audit milieu. Une même association luminophore/particule à effet plasmon de surface peut donc être utilisé pour des matériaux à marquer aussi différents que du papier, du verre, du plastique... ;
- la coexistence du luminophore et de la particule à effet plasmon de surface dans une entité physique de structure déterminée et stable permet de contrôler de manière optimale l'interaction entre ces deux molécules, notamment leur distance qui joue un rôle crucial dans la modification du spectre.

Avantageusement, cet agrégat présente une dimension inférieure à 200 nm.

Une telle dimension permet de constituer des agrégats relativement petits qui n'altèrent pas les propriétés mécaniques de matériaux fins (notamment films et/ou fibres) constitutifs de l'objet à authentifier. En effet, des dispositifs de codage optique présentant une taille trop importante risquent de ne pas respecter ces propriétés mécaniques et donc de détériorer localement l'objet à authentifier.

De plus, dans le cas où le dispositif de codage optique présente des dimensions inférieures à 60 nm, il est indécelable à l'oeil nu.

En outre, cette dimension avantageusement inférieure à 200 nm est tout à fait compatible avec des interactions à faible distance entre luminophores et particules à effet plasmon.

En effet et selon une caractéristique avantageuse de l'invention, la distance entre le luminophore et la particule présentant un effet de plasmon de surface est inférieure à 30 nm. Une telle distance favorise l'interaction entre particule et luminophore.

Cette distance peut même être réduite à néant, le luminophore et ladite particule étant alors en contact.

Selon une autre caractéristique avantageuse de l'invention, on recouvre le luminophore et/ou ladite particule d'une couche séparatrice, constituée d'une matière transparente auxdits rayons infrarouges, visibles ou ultraviolets.

En d'autres termes, on intercale un matériau dit « espaceur » entre le luminophore et la particule, ce qui permet d'établir entre eux une distance favorable à cette interaction.

Selon une autre caractéristique avantageuse de l'invention, les particules à effet plasmon de surface sont composées d'un métal électriquement conducteur présentant une densité et une mobilité électronique élevée, tels que l'or, l'argent, le cuivre, l'aluminium, et le sodium.

De tels métaux peuvent en effet générer des plasmons de surface lorsque leurs atomes sont excités dans les domaines infrarouge, visible ou ultraviolet.

Alternativement, lesdites particules peuvent être composées d'une nanoparticule en un matériau diélectrique ou semi-conducteur recouvert par un film en un métal électriquement conducteur présentant une densité et une mobilité électronique élevées, tels que l'or, l'argent, le cuivre, de manière à former un résonateur optique apte à présenter un effet plasmon de surface adapté au spectre de luminescence dudit luminophore.

Une telle particule permet donc de générer des plasmons de surface par résonance optique en adéquation avec les spectres d'émission des luminophores. Ainsi, on peut augmenter le nombre de luminescences possibles en modifiant la taille de ces particules ou l'épaisseur du film résonateur optique composant de telles particules.

De tels matériaux permettent ainsi de réaliser des résonateurs optiques performants.

L'utilisation pour l'effet plasmon d'un nanodispositif résonateur optique, à savoir une couche de métal sur une particule isolante, est particulièrement privilégiée. En effet, cette option permet d'atteindre des fréquences de résonance beaucoup plus larges que dans le cas de simples nanoparticules plasmon : typiquement plusieurs centaines de nm du visible à l'IR par exemple, en modifiant uniquement les dimensions géométriques du résonateur. Il n'est donc pas nécessaire de modifier sa nature chimique pour changer la fréquence plasmon.

Selon une autre caractéristique avantageuse de l'invention, le luminophore est choisi parmi :
▪ les luminophores en matière organique : la rhodamine-B-isothiocyanate (RBITC), la fluorescéine isothiocyanate (FITC), la fluorescéine, la rhodamine, l'éosine, la pyranine, l'aminoG ;
▪ les nanocristaux de ZnO, ZnS, CdSe, InGaP, InP, Si, Ge, GaAs, GaP, GaAsP ;
▪ les matrices d'oxyde de sulfure, de phosphate ou de vanadate dopées par un ion de terre rare, telles que Y₂O₃:Eu, Y₂O₂S:Eu, BaMgAl₁₆O₁₇:Eu, GdBO₃:Eu, YGdBO₃:Eu, YPVO₄:Eu, Gd₂O₃:Tb, Gd₂O₂S:Tb, Y₃Al₅O₁₂:Tb, Y₂SiO₅:Ce, LaPO₄:Tb, Ce ;
▪ les matrices de semi-conducteurs ou d'oxydes dopées par un métal de transition, telles que ZnS:Mn, ZnS:Au, ZnS:Al, ZnS:Ag, ZnO:Ag, ZnO:Cu, ZnO:Mn, Zn₂SiO₄:Mn, Al₂O₃:Cr, Al₂O₃:Ti.

Un tel luminophore est apte à émettre par luminescence des rayons infrarouges, visibles ou ultraviolets.

Selon une autre caractéristique avantageuse de l'invention, la couche séparatrice recouvrant le luminophore et/ou les particules à effet plasmons de surface est constituée d'un polymère ou d'un oxyde minéral tel que le polysiloxane (SiO₂), l'oxyde de zirconium (ZrO₂) ou l'alumine (Al₂O₃).

Une telle couche séparatrice est transparente aux rayons infrarouges, visibles ou ultraviolets et elle permet de maîtriser la distance séparant les luminophores des particules.

Selon une autre caractéristique avantageuse de l'invention, l'enveloppe d'encapsulation du luminophore et des particules à effet plasmon de surface est constituée d'un oxyde minéral tel que le polysiloxane (SiO₂), l'oxyde de zirconium (ZrO₂) ou l'alumine (Al₂O₃).

Une telle enveloppe est transparente aux rayons infrarouges, visibles ou ultraviolets et elle permet de maîtriser la distance séparant le luminophore desdites particules.

L'invention concerne également une méthode de marquage d'un objet, notamment constitué par un textile, un papier, un verre ou un plastique, aux fins de le rendre infalsifiable. Cette méthode consiste à solidariser audit objet un dispositif de codage optique tel que précédemment décrit.

L'invention concerne enfin une méthode d'authentification d'un tel objet. Elle comprend les étapes consistant :
▪ à éclairer ledit objet au moyen d'une source lumineuse émettant des rayons infrarouges, visibles ou ultraviolets ;
▪ à capter les rayons réémis par ledit objet au moyen d'un détecteur spectral ;
▪ à comparer le spectre lumineux émis par ledit objet avec un spectre de référence ;
▪ à prononcer l'authenticité ou la fausseté dudit objet.

### BREVE DESCRIPTION DES FIGURES

La manière dont l'invention peut être réalisée et les avantages qui en découlent ressortiront aussi des exemples de réalisation qui suivent, donnés à titre indicatif et non limitatif, à l'appui des figures annexées parmi lesquelles :
La figure 1 est une représentation schématique en section de quatre variantes qui ne font pas partie de l'invention mais représentent des éléments de l'état de la technique qui sont utiles à la compréhension de l'invention.
La figure 2 est une représentation schématique en section de cinq variantes conformes à un premier mode de réalisation préféré de l'invention.
La figure 3 est une représentation schématique en section de trois variantes qui ne font pas partie de l'invention mais représentent des éléments de l'état de la technique qui sont utiles à la compréhension de l'invention.
La figure 4 est une représentation schématique en section de dix variantes qui ne font pas partie de l'invention mais représentent des éléments de l'état de la technique qui sont utiles à la compréhension de l'invention.
La figure 5 est une représentation schématique en section de trois variantes conformes à un deuxième mode de réalisation préféré de l'invention.
La figure 6 est un graphe représentant les spectres de fluorescence résultant des interactions entre un luminophore organique RbITC respectivement avec des nanoparticules d'or, respectivement de 8 et 16 nm en résonance plasmon, et avec des nanotraceurs sans particule d'or.

Pour simplifier la lecture de ces figures, les surfaces des luminophores sont matérialisées par des aplats noirs, les surface des particules à effet plasmon de surface sont matérialisées par des aplats blancs criblés de points noirs, les surfaces des couches séparatrices sont matérialisées par des hachures obliques, tandis que les surfaces des enveloppes d'encapsulation sont matérialisées par des aplats blancs.

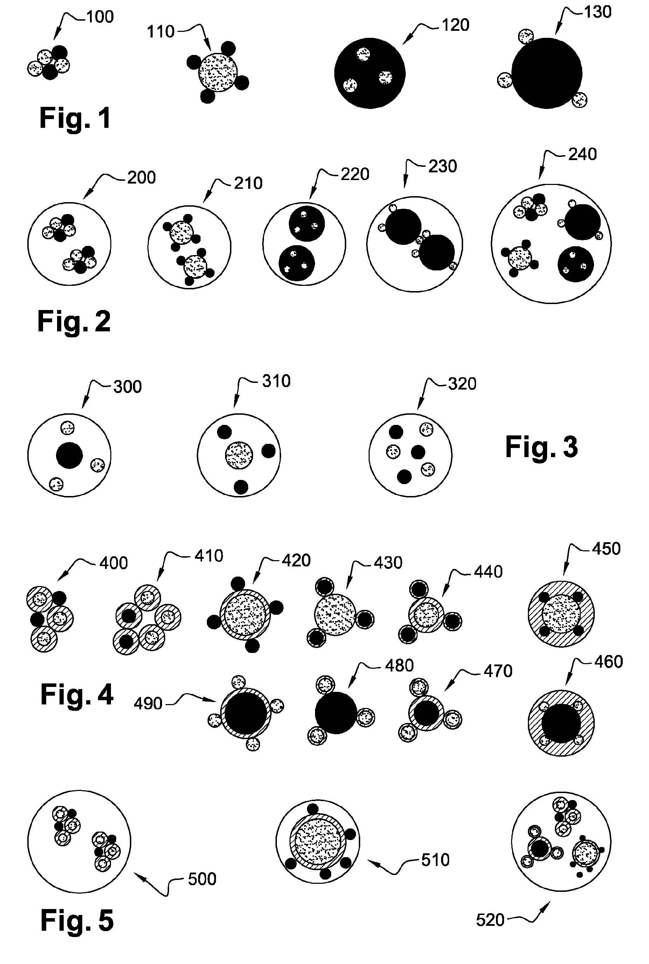

C'est pourquoi les éléments unitaires des figure 1 à 5 ne sont pas individuellement numérotés, ce qui permet en outre de présenter des figures claires.

### MODES DE REALISATION PREFERES DE L'INVENTION

La figure 1 illustre quatre variantes ou formes de réalisation qui ne font pas partie de l'invention mais représentent des éléments de l'état de la technique qui sont utiles à la compréhension de l'invention.

Les quatre agrégats **100, 110, 120** et **130** présentés ici sont tous constitués de luminophores agrégés à des particules à effet plasmon de surface.

Comme on le voit, les dimensions et positions respectives des luminophores et des particules peuvent varier d'une forme de réalisation à l'autre. Ainsi, l'agrégat 100 est composé de deux luminophores solidarisés, par exemple par les forces de Waals, à trois particules à effet plasmon de surface. Dans le cas de l'agrégat 100, les luminophores et les particules présentent des dimensions semblables.

A l'inverse, l'agrégat **110** est composé d'une grosse particule à effet plasmon de surface sur laquelle sont agglomérés quatre luminophores (à tout le moins dans le plan de la feuille qui constitue le plan de section de cet agrégat).

L'agrégat **130** correspond à la situation inverse à celle de l'agrégat **110,** où trois petites particules sont associées à un « gros » luminophore.

L'agrégat **120** présente quant à lui une structure différente et originale, puisque les particules à effet plasmon de surface sont logées au sein même d'un luminophore de grande dimension.

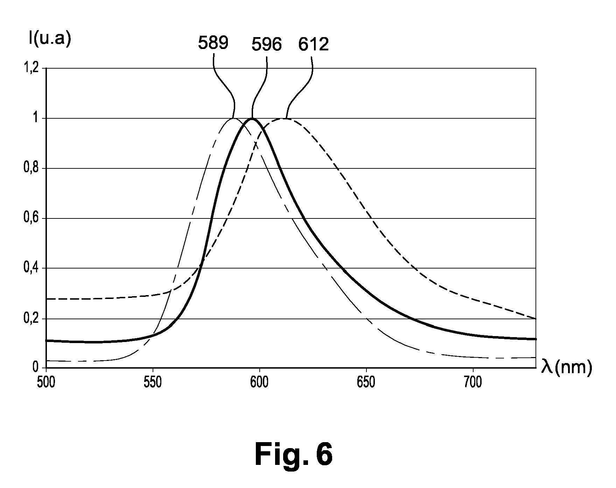

Dans la mesure où les luminophores et les particules composant les agrégats **100, 110, 120** et **130** sont en contact les uns avec les autres, c'est-à-dire qu'ils se trouvent à une distance nulle, ils sont aptes à entrer en interaction lorsqu'ils sont soumis à des rayons infrarouges, visibles ou ultraviolets émis par une source lumineuse, par exemple lors de l'authentification d'un objet. Les luminophores réémettent alors un spectre lumineux caractéristique qui est modulé par les interactions avec les particules à effet plasmon de surface. Une telle modulation est exposée par la suite en relation avec la figure 6.

La figure 2 représente cinq variantes ou formes de réalisation conformes à un premier mode de réalisation préféré de l'invention. Les cinq dispositifs de codage optiques **200, 210, 220, 230** et **240** comprennent tous des luminophores associées à des particules à effet plasmon de surface, le tout étant encapsulé ou noyé au sein d'une enveloppe réalisée en une matière transparente aux rayons infrarouges, visibles ou ultraviolets. Comme on le voit sur la figure 2, les ensembles enrobés par les enveloppes sont identiques aux agrégats **100, 110, 120** et **130** illustrés par la figure 1. Ainsi, le dispositif de codage optique **200** comporte deux ensembles identiques à l'agrégat **100,** noyés au sein d'une enveloppe. De même, le dispositif de codage optique **210** comporte deux ensembles identiques à l'agrégat **110,** noyés au sein d'une enveloppe et ainsi de suite. Le dispositif de codage optique **240** est quant à lui composé d'une enveloppe encapsulant quatre ensembles identiques respectivement aux agrégats **100, 110, 120** et **130.**

Par conséquent, de même que chaque agrégat **100, 110, 120** et **130** de la figure 1 est apte à constituer un dispositif de codage optique présentant un spectre lumineux unique, donc infalsifiable, les agrégats **200, 210, 220, 230** et **240** sont aptes à constituer un dispositif de codage optique unique et infalsifiable.

La figure 3 correspond à un mode de réalisation qui ne fait pas partie de l'invention, dans lequel les agrégats, **300, 310** et **320** sont tous constitués d'un ou plusieurs luminophore(s), d'une ou plusieurs particule(s) à effet plasmon de surface, le tout étant encapsulé par une enveloppe analogue à celle composant les agrégats **200, 210, 220, 230** et **240** de la figure 2.

Cependant, dans le cas de la figure 3, les luminophores et les particules sont isolés au sein de chaque enveloppe. La distance entre un luminophore et une particule est inférieure à quelques dizaines de nanomètres, de préférence à trente nm. Comme cela a déjà été exposé précédemment, cette distance permet aux particules et aux luminophores d'interagir de façon à moduler le spectre lumineux réémis par luminescence. Pour maîtriser cette distance ou intervalle entre luminophores et particules, il est souhaitable de contrôler les proportions relatives de luminophores, de particules et de matière composant cette enveloppe lors de leur mélange.

Comme dans le cas de la figure 1, les éléments composant les agrégats **300, 310** et **320** de la figure 3 présentent des dimensions et des positions respectives diverses. Ainsi, l'agrégat **300** comprend un « gros » luminophore et trois petites particules tandis que l'agrégat **310** présente une structure « anti-symétrique » et que l'agrégat **320** présente un luminophore et des particules de tailles semblables.

La figure 4 correspond à un mode de réalisation qui ne fait pas partie de l'invention, dans lequel les luminophores et/ou les particules à effet plasmon de surface sont recouverts individuellement par une couche séparatrice en une matière transparente au rayons infrarouges, visibles ou ultraviolets.

La figure 4 présente ainsi dix agrégats **400, 410, 420, 430, 440, 450, 460, 470, 480, 490** qui représentent autant de combinaisons possibles de leur positions et dimensions respectives. Ainsi, la couche séparatrice peut recouvrir seulement les particules, comme dans le cas des agrégats **400, 420** et **480.** La couche séparatrice peut également ne recouvrir que les luminophores, comme dans le cas des agrégats **430** et **490.** Elle peut recouvrir les luminophores et les particules (agrégats **410, 440** et **470**).

Enfin, elle peut recouvrir un ensemble analogue aux agrégats **110** ou **130,** ce qui est représenté par les agrégats **450** et **460.**

Comme on le voit encore sur la figure 4, les dimensions relatives des particules et des luminophores peuvent être diverses, ce qui enrichit les combinaisons possibles et, partant, les spectres de luminescence émis par chacun de ces dispositifs de codage optique.

Comme exposé précédemment, cette couche séparatrice, ou matériau « espaceur », permet de maintenir une distance maîtrisée entre luminophores et particules. Cette distance est préférentiellement inférieure à trente nm, de manière à faciliter les interactions entre les luminophores et les particules à effet plasmon de surface.

Ainsi, du fait de ces interactions, chaque agrégat **400, 410, 420, 430, 440, 450, 460, 470, 480, 490** émet un spectre lumineux unique et infalsifiable.

La figure 5 représente quelques formes de réalisation conformément à un deuxième mode de réalisation préféré de la présente invention. En l'occurrence, des ensembles analogues à ceux illustrés par la figure 4 sont en outre encapsulés au moyen d'une enveloppe transparente aux rayons infrarouges, visibles ou ultraviolets. Ainsi par exemple, le dispositif de codage optique **500** comprend deux ensembles semblables à l'agrégat **400** formé par deux luminophores et trois particules recouvertes d'une couche séparatrice.

De même, le dispositif de codage optique **520** comprend une enveloppe encapsulant trois ensembles semblables aux agrégats **400, 470** et **420.** D'autres combinaisons des positions et dimensions des différents composants de ces agrégats sont possibles tout en se conformant à ce cinquième mode de réalisation.

La figure 6 est un graphe représentant l'intensité de spectres lumineux en fonction de la longueur d'onde d'émission de luminescence. Ce diagramme met en évidence l'influence de particules à plasmon de surface interagissant avec des luminophores.

En l'occurrence, les luminophores sont constitués de rhodamine-B-isothiocyanate (RBITC), tandis que les particules sont constituées de nanoparticules d'or.

Les trois spectres lumineux présentés ici correspondent à la réponse émise par trois échantillons différents éclairés au moyen d'une source lumineuse émettant à une longueur d'onde de 380 nm. Parmi ces trois échantillons, l'un d'entre eux est un échantillon témoin, composé d'un luminophore organique, en l'occurrence rhodamine-B-isothiocyanate (RBITC), encapsulé dans une bille de polysiloxane (SiO₂) jouant le rôle d'enveloppe. Lorsqu'il est éclairé par des rayons de 380 nm de longueur d'onde, cet échantillon témoin réémet par luminescence le spectre lumineux représenté en traits mixtes et présentant un pic d'intensité lumineuse pour une longueur d'onde à 589 nm.

Les deux autres spectres lumineux correspondent à des échantillons comprenant des dispositifs de codage optiques.

Ainsi, le spectre lumineux représenté en traits pleins et présentant un pic d'intensité lumineuse pour une longueur d'onde de 596 nm provient de l'émission luminescente d'un dispositif de codage optique composé d'agrégats comprenant les mêmes luminophores organiques (RBITC) que l'échantillon témoin ainsi que des nanoparticules d'or constituant les particules à effet plasmon de surface.

Les agrégats de ce deuxième échantillon sont en outre encapsulés, à l'instar de l'échantillon témoin, dans une enveloppe en polysiloxane (SiO₂).

En observant la figure 6, on constate que le spectre lumineux émis par le dispositif de codage optique correspondant au deuxième échantillon est décalé vers les grandes longueurs d'onde. En d'autres termes, ces deux spectres lumineux (**589** et **596 ;** traits mixtes et trais pleins) sont nettement distincts l'un de l'autre.

Le troisième spectre lumineux (**612** ; traits pointillés) représente l'émission luminescente d'un troisième échantillon correspondant également à un dispositif de codage optique.

Ce troisième échantillon est composé d'agrégats similaires à ceux composant le deuxième échantillon **(596),** à cette différence prés que les nanoparticules d'or présentes des dimensions supérieures. En effet, les nano particules d'or composant les particules du deuxième échantillon **(596)** possèdent un diamètre médian de 8 nm, tandis que les nano particules d'or constituant les particules du troisième échantillon possèdent un diamètre médian de seize nm.

Or, comme on peut le constater en observant la figure 6, le doublement de la taille de ces particules entraîne également un « glissement » ou un décalage vers les grandes longueurs d'onde.

Par comparaison, l'échantillon témoin **(589),** lequel ne comporte pas de particules à effet plasmon de surface, présente un spectre plus étroit et centré sur une longueur d'onde inférieure.

Ainsi, l'expérience schématisée par la figure 6 met bien en évidence l'influence des plasmons de surface sur le spectre de luminescence des luminophores. Cette influence est due, comme exposé précédemment, aux interactions survenant à une échelle nanométrique entre particules et luminophores.

Ainsi, le dispositif de codage optique objet de la présente invention met en oeuvre des interactions physiques spécifiques et originales entre des luminophores et particules constituées de matériaux à effet plasmon de surface. Cela permet de créer de nouvelles signatures spectrales en luminescence, difficiles à falsifier.

Pour cela, comme exposé précédemment, un dispositif de codage optique doit comporter au moins deux matériaux différents en interaction mutuelle, ces deux matériaux étant positionnés l'un de l'autre selon une distance de quelques dizaines de nm. En effet, lorsque l'intervalle séparant les deux matériaux augmente et dépasse une certaine valeur, il n'y a plus d'interactions entre particules et luminophores, si bien que l'on n'obtient plus de spectres de luminescence originaux donc uniques.

Par ailleurs, les dispositifs de codage optiques conformes à la présente invention doivent présenter des dimensions petites afin de pouvoir être solidarisés à l'objet à authentifier.

Ces dispositifs de codage optiques peuvent être associés à tout ou partie de la surface de cet objet. Ils peuvent ainsi être localisés en un point précis ou repartis sur toute la surface de cet objet.

Il est cependant essentiel que l'association de ces dispositifs de codage optique ne modifie pas les propriétés mécaniques et/ou esthétiques de l'objet à authentifier. C'est pourquoi il est souhaitable que les agrégats composant ces dispositifs de codage optique présentent une taille inférieure à 200 nm. Du reste, l'effet plasmon de surface ne peut être obtenu qu'à partir de particules de petite taille, c'est-à-dire de taille nanométrique. Par conséquent, ces deux contraintes dimensionnelles sont compatibles et aboutissent à la fabrication de dispositifs de codage optique nanométriques.

Par ailleurs, l'invention présente l'avantage d'une certaine versatilité des interactions entre plasmon et luminophore. Ainsi, en faisant varier la taille des particules à effet plasmon de surface, on peut modifier les domaines de longueur d'onde dans lesquelles ces particules interfèrent avec les luminophores et ce, sans changer la nature chimique des matériaux mis en oeuvre. De cette manière, on peut fabriquer de nombreux dispositifs de codage optique présentant chacun une signature ou un spectre luminescent unique. Cette grande diversité, due à des interactions toutes différentes, rend quasiment impossible la falsification du code optique, y compris au moyen d'une analyse chimique des matériaux mis en oeuvre.

De plus, les interactions entre luminophores et particules à effet plasmon permettent non seulement de faire « glisser » le pic d'intensité du spectre de luminescence, mais également d'augmenter ou de diminuer de manière spécifique l'intensité lumineuse des autres parties du spectre et en particulier de ses extrémités. Cette augmentation ou cette diminution d'intensité lumineuse dépendent également de la distance séparant le luminophore de la particule à effet plasmon de surface.

C'est pourquoi la présente invention propose de mettre en oeuvre une enveloppe d'encapsulation, ou une couche séparatrice et une enveloppe d'encapsulation, de façon à optimiser les distances entre les matériaux en interaction. Comme le montrent les figures 2 à 5, dont les figures 2 et 5 sont des représentations schématiques en section de variantes conformes à un premier et un deuxième mode de réalisation préféré de l'invention, il existe de nombreuses possibilités de définir un intervalle spécifique et, partant de réaliser un dispositif de codage optique présentant un spectre de luminescence unique c'est-à-dire une signature originale.

En outre, l'emploi d'une enveloppe d'encapsulation, ou d'une couche séparatrice et d'une enveloppe d'encapsulation, permet de rendre les agrégats composant le dispositif de codage optique plus résistants par exemple à l'abrasion.

Comme le montrent encore les figures 2 et 5, la présente invention permet de combiner plusieurs luminophores de nature différente et plusieurs matériaux de nature différente, ce qui permet d'obtenir de multiples interactions, qui sont alors d'autant plus complexes à reproduire.

Par ailleurs, la possibilité d'employer des particules formant un résonateur optique, comme exposé précédemment, en interaction avec les luminophores compris dans les agrégats formant le dispositif de codage optique permet d'étendre encore davantage la gamme de longueurs d'onde des domaines d'interférence entre luminophores et particules. Cela permet donc également d'augmenter les possibilités de codage optique par la création de nouveaux spectres de luminescence, tout en utilisant les mêmes matériaux de base.

D'autres formes de réalisation sont possibles sans pour autant sortir du cadre de la présente invention qui est défini par les revendications jointes.

## Revendications

1. Dispositif de codage optique (300, 310, 320, 500, 510, 520) se présentant sous forme de bille, comprenant au moins
deux agrégats susceptibles d'émettre par luminescence des rayons infrarouges, visibles ou ultraviolets, lesdits agrégats comprenant au moins un luminophore et au moins une particule constituée d'un matériau à effet plasmon de surface, ledit luminophore et ladite particule étant destinés à entrer en interaction, ***caractérisé* en ce que** le dispositif (300, 310, 320, 500, 510, 520) comprend une enveloppe encapsulant les agrégats, ladite enveloppe étant constituée d'une matière transparente aux rayons infrarouges, visibles ou ultraviolets.

2. Dispositif de codage optique (300, 310, 320, 500, 510, 520) selon la revendication 1, ***caractérisé* en ce que** la distance entre le luminophore et la particule à effet plasmon de surface est inférieure à 30 nanomètres.

3. Dispositif de codage optique (300, 310, 320, 500, 510, 520) selon l'une des revendications précédentes, ***caractérisé* en ce que** le luminophore et la particule à effet plasmon de surface sont en contact.

4. Dispositif de codage optique (300, 310, 320, 500, 510, 520) selon l'une des revendications 1 à 3, ***caractérisé* en ce qu'**une couche séparatrice recouvre le luminophore et/ou la particule à effet plasmon de surface, ladite couche séparatrice étant constituée d'une matière transparente aux rayons infrarouges, visibles ou ultraviolets.

5. Dispositif de codage optique (300, 310, 320, 500, 510, 520) selon l'une des revendications précédentes, ***caractérisé* en ce que** l'agrégat présente une dimension inférieure à 200 nanomètres.

6. Dispositif de codage optique (300, 310, 320, 500, 510, 520) selon l'une des revendications précédentes, ***caractérisé* en ce que** ladite particule est apte à présenter un effet plasmon de surface lorsqu'elle est excitée au moyen d'un spectre d'énergie couvrant entièrement ou partiellement le spectre d'émission dudit luminophore.

7. Dispositif de codage optique (300, 310, 320, 500, 510, 520) selon la revendication 6, ***caractérisé* en ce que** ladite particule est composée d'un métal électriquement conducteur présentant une densité et une mobilité électronique élevées, choisi dans le groupe comprenant l'or, l'argent, le cuivre, l'aluminium et le sodium.

8. Dispositif de codage optique (300, 310, 320, 500, 510, 520) selon l'une des revendications 1 à 6, ***caractérisé* en ce que** la particule à effet plasmon de surface est composée d'une nanoparticule réalisée en un matériau diélectrique ou semi-conducteur recouvert par un film en un métal électriquement conducteur présentant une densité et une mobilité électronique élevées, choisi dans le groupe comprenant l'or, l'argent, le cuivre, de manière à former un résonateur optique apte à présenter un effet plasmon de surface adapté au spectre de luminescence dudit luminophore.

9. Dispositif de codage optique (300, 310, 320, 500, 510, 520) selon la revendication 8, ***caractérisé* en ce que** la nanoparticule est composée d'un polymère ou d'un oxyde minéral tel que le polysiloxane, l'oxyde de zirconium ou l'alumine.

10. Dispositif de codage optique (300, 310, 320, 500, 510, 520) selon l'une des revendications précédentes, ***caractérisé* en ce que** le luminophore est choisi parmi :
▪ les luminophores en matière organique choisis dans le groupe comprenant la rhodamine-B-isothiocyanate, la fluorescéine isothiocyanate, la fluorescéine, la rhodamine, l'éosine, la pyranine, l'aminoG ;
▪ les nanocristaux de ZnO, ZnS, CdSe, InGaP, InP, Si, Ge, GaAs, GaP, GaAsP ;
▪ les matrices d'oxyde, de sulfure, de phosphate ou de vanadate dopées par un ion de terre rare, telles que Y₂O₃:Eu, Y₂O₂S:Eu, BaMgAl₁₆O₁₇:Eu, GdBO₃:Eu, YGdBO₃:Eu, YPVO₄:Eu, Gd₂O₃:Tb, Gd₂O₂S:Tb, Y₃Al₅O₁₂:Tb, Y₂SiO₅:Ce, LaPO₄:Tb, Ce ;
▪ les matrices de semi-conducteurs ou d'oxydes dopées par un métal de transition, telles que ZnS:Mn, ZnS:Au, ZnS:Al, ZnS:Ag, ZnO:Ag, ZnO:Cu, ZnO:Mn, Zn₂SiO₄:Mn, Al₂O₃:Cr, Al₂O₃:Ti.

11. Dispositif de codage optique (300, 310, 320, 500, 510, 520) selon l'une des revendications 4 à 10, ***caractérisé* en ce que** la couche séparatrice est constituée d'un polymère ou d'un oxyde minéral tel que le polysiloxane, l'oxyde de zirconium ou l'alumine.

12. Dispositif de codage optique (300,310,320,500,510,520) selon l'une des revendications précédentes, ***caractérisé* en ce que** l'enveloppe est constituée d'un oxyde minéral tel que le polysiloxane, l'oxyde de zirconium ou l'alumine.

13. Méthode de marquage d'un objet tel qu'un textile, un papier, un verre ou un plastique, ***caractérisée* en ce qu'**elle consiste à solidariser audit objet un dispositif de codage optique (300, 310, 320, 500, 510, 520) selon l'une des revendications précédentes.

14. Méthode d'authentification d'un objet, tel qu'un textile, un papier, un verre ou un plastique, intégrant un dispositif de codage optique (300, 310, 320, 500, 510, 520) selon l'une des revendications 1 à 12, ***caractérisé* en ce qu'**elle comprend les étapes consistant :
▪ à éclairer ledit objet au moyen d'une source lumineuse émettant des rayons infrarouges, visibles ou ultraviolets ;
▪ à capter les rayons réémis par ledit objet au moyen d'un détecteur spectral ;
▪ à comparer le spectre lumineux émis par ledit objet à un spectre de référence;
▪ à prononcer l'authenticité ou la fausseté dudit objet.

## Patentansprüche

1. Vorrichtung (300, 310, 320, 500, 510, 520) zur optischen Kodierung, die sich in Kugelform darstellt, mindestens aufweisend
zwei Aggregate, die durch Lumineszenz infrarote, sichtbare oder ultraviolette Strahlen abgeben können, wobei die Aggregate mindestens einen Luminophor und mindestens einen Partikel umfassen, der aus einem Material mit Oberflächenplasmonwirkung besteht, wobei der Luminophor und der Partikel dazu bestimmt sind, in Wechselwirkung zu treten, **dadurch gekennzeichnet, dass** die Vorrichtung (300, 310, 320, 500, 510, 520) eine Hülle aufweist, welche die Aggregate einkapselt, wobei die Hülle aus einem für infrarote, sichtbare oder ultraviolette Strahlen transparenten Material besteht.

2. Vorrichtung (300, 310, 320, 500, 510, 520) zur optischen Kodierung nach Anspruch 1, **dadurch gekennzeichnet, dass** der Abstand zwischen dem Luminophoren und dem Partikel mit Oberflächenplasmonwirkung weniger als 30 Nanometer beträgt.

3. Vorrichtung (300, 310, 320, 500, 510, 520) zur optischen Kodierung nach einem der vorhergehenden Ansprüche, **dadurch gekennzeichnet, dass** der Luminophor und der Partikel mit Oberflächenplasmonwirkung in Kontakt sind.

4. Vorrichtung (300, 310, 320, 500, 510, 520) zur optischen Kodierung nach einem der Ansprüche 1 bis 3, **dadurch gekennzeichnet, dass** eine Trennschicht den Luminophoren und den Partikel mit Oberflächenplasmonwirkung bedeckt, wobei die Trennschicht aus einem für infrarote, sichtbare oder ultraviolette Strahlen transparenten Material besteht.

5. Vorrichtung (300, 310, 320, 500, 510, 520) zur optischen Kodierung nach einem der vorhergehenden Ansprüche, **dadurch gekennzeichnet, dass** das Aggregat eine Abmessung aufweist, die weniger als 200 Nanometer beträgt.

6. Vorrichtung (300, 310, 320, 500, 510, 520) nach einem der vorhergehenden Ansprüche, **dadurch gekennzeichnet, dass** der Partikel in der Lage ist, eine Oberflächenplasmonwirkung darzubieten, wenn er mittels eines Energiespektrums angeregt wird, welches das Emissionsspektrum des Luminophoren ganz oder teilweise abdeckt.

7. Vorrichtung (300, 310, 320, 500, 510, 520) zur optischen Kodierung nach Anspruch 6, **dadurch gekennzeichnet, dass** der Partikel aus einem eine hohe Elektronendichte und -mobilität aufweisenden elektrisch leitenden Metall besteht, das aus der Gruppe ausgewählt ist, die Gold, Silber, Kupfer, Aluminium und Natrium umfasst.

8. Vorrichtung (300, 310, 320, 500, 510, 520) zur optischen Kodierung nach einem der Ansprüche 1 bis 6, **dadurch gekennzeichnet, dass** der Partikel mit Oberflächenplasmonwirkung aus einem Nanopartikel besteht, der aus einem dielektrischen oder halbleitenden Material hergestellt ist, das mit einer Schicht aus einem eine hohe Elektronendichte und -mobilität aufweisenden elektrisch leitenden Metall bedeckt ist, das aus der Gruppe ausgewählt ist, die Gold, Silber, Kupfer umfasst, um einen optischen Resonator zu bilden, der in der Lage ist, eine Oberflächenplasmonwirkung darzubieten, die an das Lumiszenzspektrum des Luminophoren angepasst ist.

9. Vorrichtung (300, 310, 320, 500, 510, 520) zur optischen Kodierung nach Anspruch 8, **dadurch gekennzeichnet, dass** der Nanopartikel aus einem Polymer oder einem Mineraloxid wie etwa Polysiloxan, Zirkoniumoxid oder Aluminiumoxid besteht.

10. Vorrichtung (300, 310, 320, 500, 510, 520) zur optischen Kodierung nach einem der vorhergehenden Ansprüche, **dadurch gekennzeichnet, dass** der Luminophor ausgewählt ist aus:
▪ Luminophoren aus organischer Substanz, die aus der Gruppe ausgewählt sind, die Rhodamin-B-Isocyanat, Fluoreszeinisocyanat, Fluoreszein, Rhodamin, Eosin, Pyranin, AminoG umfasst;
▪ ZnO-, ZnS-, CdSe-, InGaP-, Si-, Ge-, GaAs-, GaP-, GaAsP-Nanokristallen;
▪ Oxid-, Sulfid-, Phosphat- oder Vanadat-Grundgerüsten, die mit einem Seltenerdion dotiert sind, wie etwa Y₂O₃:Eu, Y₂O₂S:Eu, Ba MgAl₁₆O₁₇: Eu, GdBO₃:Eu, YGdBO₃:Eu, YPVO₄:Eu, Gd₂O₃:Tb, Gd₂O₂S:Tb, Y₃Al₅O₁₂:Tb, Y₂SiO₅:Ce, LaPO₄:Tb, Ce;
▪ Halbleiter- oder Oxidgrundgerüsten, die mit einem Übergangsmetall dotiert sind, wie etwa ZnS:Mn, ZnS:Au, ZnS:Al, ZnS:Ag, ZnO:Ag, ZnO:Cu, ZnO:Mn, Zn₂SiO₄:Mn; Al₂O₃:Cr, Al₂O₃:Ti.

11. Vorrichtung (300, 310, 320, 500, 510, 520) zur optischen Kodierung nach einem der Ansprüche 4 bis 10, **dadurch gekennzeichnet, dass** die Trennschicht aus einem Polymer oder Mineraloxid wie etwa Polysiloxan, Zirkoniumoxid oder Aluminiumoxid besteht.

12. Vorrichtung (300, 310, 320, 500, 510, 520) zur optischen Kodierung nach einem der vorhergehenden Ansprüche, **dadurch gekennzeichnet, dass** die Hülle aus einem Mineraloxid wie etwa Polysiloxan, Zirkoniumoxid oder Aluminiumoxid besteht.

13. Verfahren zum Markieren eines Gegenstands wie etwa eines Textils, Papiers, Glases oder Kunststoffs, **dadurch gekennzeichnet, dass** es darin besteht, an dem Gegenstand eine Vorrichtung (300, 310, 320, 500, 510, 520) zur optischen Kodierung nach einem der vorhergehenden Ansprüche zu befestigen.

14. Verfahren zum Authentifizieren eines Gegenstands wie etwa eines Textils, Papiers, Glases oder Kunststoffs, der eine Vorrichtung (300, 310, 320, 500, 510, 520) zur optischen Kodierung nach einem der Ansprüche 1 bis 12 integriert hat, **dadurch gekennzeichnet, dass** es die Schritte umfasst, die darin bestehen:
▪ den Gegenstand mittels einer Lichtquelle zu beleuchten, die infrarote, sichtbare oder ultraviolette Strahlen abgibt;
▪ die vom Gegenstand rückgestrahlten Strahlen mittels eines Spektraldetektors zu erfassen;
▪ das vom Gegenstand abgegebene Lichtspektrum mit einem Bezugsspektrum zu vergleichen;
▪ über die Authentizität oder Fälschung des Gegenstands zu befinden.

## Claims

1. Optical coding device (300, 310, 320, 500, 510, 520) having the form of beads, comprising at least two aggregates suitable for emitting infrared, visible or ultraviolet rays by luminescence, comprising at least one luminophore and at least one particle consisting of a surface plasmon effect material, the said luminophore and the said particle being suitable for entering into interaction, ***characterized* in that** the device (300, 310, 320, 500, 510, 520) comprises an envelope encapsulating the the aggregates, the said envelope consisting of a material transparent to infrared, visible or ultraviolet rays.

2. Optical coding device (300, 310, 320, 500, 510, 520) according to claim 1, ***characterized* in that** the distance between the luminophore and the surface plasmon effect particle is shorter than 30 nanometers.

3. Optical coding device (300, 310, 320, 500, 510, 520) according to one of the preceding claims, ***characterized* in that** the luminophore and the surface plasmon effect particle are in contact.

4. Optical coding device (300, 310, 320, 500, 510, 520) according to one of claims 1 to 3, ***characterized* in that** a separating layer covers the luminophore and/or the surface plasmon effect particle, the said separating layer consisting of a material transparent to infrared, visible or ultraviolet rays.

5. Optical coding device (300, 310, 320, 500, 510, 520) according to one of the preceding claims, ***characterized* in that** the aggregate has a dimension smaller than 200 nanometers.

6. Optical coding device (300, 310, 320, 500, 510, 520) according to one of the preceding claims, ***characterized* in that** the said particle is suitable for presenting a surface plasmon effect when it is excited by means of a spectrum having an energy entirely or partially covering the emission spectrum of the said luminophore.

7. Optical coding device (300, 310, 320, 500, 510, 520) according to claim 6, ***characterized* in that** the said particle comprises an electrically conducting metal having a high density and a high electronic mobility, selected from the group comprising gold, silver, copper, aluminium and sodium.

8. Optical coding device (300, 310, 320, 500, 510, 520) according to one of claims 1 to 6, ***characterized* in that** the surface plasmon effect particle comprises a nanoparticle made from a dielectric or semiconductor material covered by an electrically conducting metal film having a high density and a high electronic mobility, selected from the group comprising gold, silver, copper, in order to form an optical resonator suitable for presenting a surface plasmon effect suitable for the luminescence spectrum of the said luminophore.

9. Optical coding device (300, 310, 320, 500, 510, 520) according to claim 8, ***characterized* in that** the nanoparticle comprises a polymer or an inorganic oxide such as polysiloxane, zirconium oxide or alumina).

10. Optical coding device (300, 310, 320, 500, 510, 520) according to one of the preceding claims, ***characterized* in that** the luminophore is selected from:
▪ organic luminophores selected from the group comprising rhodamine-B-isothiocyanate, fluorescein isothiocyanate, fluorescein, rhodamine, eosine, pyranine, aminoG;
▪ nanocrystals of ZnO, ZnS, CdSe, InGaP, InP, Si, Ge, GaAs, GaP, GaAsP;
▪ oxide, sulphide, phosphate or vanadate matrices doped with a rare earth ion, such as Y₂O₃:Eu, Y₂O₂S:Eu, BaMgAl₁₆O₁₇:Eu, GdBO₃:Eu, YGdBO₃:Eu, YPVO₄:Eu, Gd₂O₃:Tb, Gd₂O₂S:Tb, Y₃Al₅O₁₂:Tb, Y₂SiO₅:Ce, LaPO₄:Tb, Ce;
▪ semiconductor or oxide matrices doped with a transition metal, such as ZnS:Mn, ZnS:Au, ZnS:Al, ZnS:Ag, ZnO:Ag, ZnO:Cu, ZnO:Mn, Zn₂SiO₄:Mn, Al₂O₃:Cr, Al₂O₃:Ti.

11. Optical coding device (300, 310, 320, 500, 510, 520) according to one of claims 4 to 10, ***characterized* in that** the separating layer consists of a polymer or an inorganic oxide such as polysiloxane, zirconium oxide or alumina.

12. Optical coding device (300, 310, 320, 500, 510, 520) according to one of the preceding claims, ***characterized* in that** the envelope consists of an inorganic oxide such as polysiloxane, zirconium oxide or alumina.

13. Method for marking an object such as a textile, paper, glass or plastic, ***characterized* in that** it consists in joining to the said object an optical coding device (300, 310, 320, 500, 510, 520) according to one of the preceding claims.

14. Method for authenticateing an object, such as a textile, paper, glass or plastic, integrating an optical coding device (300, 310, 320, 500, 510, 520) according to one of claims 1 to 12, ***characterized* in that** it comprises the steps consisting in:
▪ illuminating the said object using a light source emitting infrared, visible or ultraviolet rays;
▪ sensing the rays re-emitted by the said object using a spectral detector;
▪ comparing the luminous spectrum emitted by the said object to a reference spectrum;
▪ declaring the authenticity or inauthenticity of the said object.
